# EUROPÄISCHE PATENTSCHRIFT

(11) **EP 1 741 336 B1**
(45) Veröffentlichungstag und Bekanntmachung des Hinweises auf die Patenterteilung: **26.12.2012**
(21) Anmeldenummer: 06012265.2
(22) Anmeldetag: 14.06.2006
(51) Int. Cl.: A01N 1/02

(54) **Verfahren und Vorrichtung zur Kryokonservierung biologischer Proben**
Process and device for the cryopreservation of biological samples
Procédé et dispostif pour la cryoconservation d'échantillons biologiques

(30) Priorität: 06.07.2005 DE 102005031648
(43) Veröffentlichungstag der Anmeldung: 10.01.2007
(73) Patentinhaber: Fraunhofer-Gesellschaft zur Förderung der angewandten Forschung e.V., 80686 München (DE)
(72) Erfinder: Fuhr, Günther, 13187 Berlin (DE); Zimmermann, Heiko, 51476 Kronberg im Taunus (DE)
(74) Vertreter: Hertz, Oliver

(56) Entgegenhaltungen:
- DE-A1- 4 438 232
- DE-A1- 10 237 125
- DE-A1- 19 949 735
- US-A- 4 531 373
- US-A1- 2003 124 716

## Beschreibung

Die Erfindung betrifft ein Verfahren zur Kryokonservierung biologischer Proben mit den Merkmalen des Oberbegriffs von Anspruch 1. Des Weiteren betrifft die Erfindung Vorrichtungen zur Durchführung eines derartigen Verfahrens.

Die Kryokonservierung ist als Verfahren zur dauerhaften Lagerung biologischer Proben im gefrorenen Zustand allgemein bekannt. Zum Schutz gegen Kälteschäden wird den Proben, die beispielsweise biologische Zellen, Zellgruppen oder Zellbestandteile im suspendierten Zustand umfassen, eine Substanz zugesetzt (so genanntes Kryoprotektivum), welche die Bildung von unerwünschten Eiskristallen in den Proben verhindert.

Bei dem Zusatz des Kryoprotektivums und dem Einfriervorgang müssen in der Regel die folgenden Anforderungen erfüllt werden. Erstens muss das Kryoprotektivum möglichst gleichmäßig in der Probensuspension verteilt werden, um definierte Einfrierbedingungen für alle Volumenteile bereitzustellen und auch lokal Kälteschäden auszuschließen. Des Weiteren müssen beim Einfrieren Temperaturgradienten vermieden werden. Schließlich muss das Kryoprotektivum möglichst stressfrei der Probensuspension zugesetzt werden. Unter mechanischem Stress kann es zur Zellyse (Zellauflösung) und z. B. bei der Kryokonservierung von Blut zur Hämolyse mit einer Auflösung der roten Blutkörperchen infolge einer Verformung und Zerstörung ihrer Hüllmembran kommen.

Die genannten Anforderungen können am besten für kleine Proben mit Volumen im sub-ml-Bereich erfüllt werden. Aus diesem Grund ist, wenn größere Probenvolumen von einigen ml bis in den Bereich von Litern, zum Beispiel Blutproben zur Herstellung von Blutkonserven kryokonserviert werden sollen, eine Zerlegung in einzelne, tropfenförmige Teilproben geeigneter Größe erwünscht. Zur Gewährleistung homogener Konservierungsbedingungen besteht ein Interesse an der Zerlegung in Teilproben mit definierten, insbesondere gleichen Volumen. Die Zerlegung in Teilproben stellt insbesondere wegen der erheblichen Tropfenzahlen eine technische und ökonomische Herausforderung dar.

Es ist bekannt, Probensuspensionen durch Versprühen in einzelne Proben aufzuteilen (siehe EP 475 409). Das Versprühen hat jedoch den Nachteil, dass ein strömungsmechanischer Stress auftritt, durch den die Überlebensrate der Zellen vermindert werden kann. Die versprühten Proben werden auf gekühlte Oberflächen gelenkt, wo sie beim Auftreffen deformiert werden und sofort erstarren. Dabei ergeben sich die folgenden weiteren Probleme. Erstens wird zusätzlicher Stress erzeugt. Des weiteren wird eine relativ große Kontaktfläche mit der gekühlten Oberfläche gebildet, was nachteilig für eine anschließende Trennung der Proben von der Oberfläche sein kann. Wenn jedoch auf die Trennung verzichtet wird, kann es beim Auftauen und einer Vereinigung der einzelnen Proben zu einem größeren Volumen zu Problemen durch Scherkräfte in der Flüssigkeit kommen.

Es ist ferner bekannt, zur Kryokonservierung Substrate mit diskreten Kompartimenten (z. B. Nanotiterplatten) zu verwenden. Diese Kompartimente haben zwar Vorteile in Bezug auf eine schonenden Ablage von einzelnen Proben. In der Praxis hat sich jedoch gezeigt, dass die Ablage der Proben relativ umständlich und zeitaufwendig sein kann. Des weiteren ist die Minimierbarkeit der Kompartimente begrenzt. Die genannten Nachteile wirken sich besonders bei der Konservierung von Volumen im ml- bis 1-Bereich aus, die in große Tropfenzahlen zerlegt werden sollen.

Die oben genannten Probleme treten nicht nur bei der herkömmlichen Konservierung von Proben tierischen oder menschlichen Ursprungs, sondern auch bei der Konservierung von Pflanzenzellen auf, bei denen wegen eines hohen Wassergehaltes nur kleinste Volumina im Bereich von einigen µl eingefroren werden.

Aus DE 102 13 809 und DE 102 07 614 ist bekannt, Substrate mit hydrophilen Oberflächenbereichen zu verwenden, um flüssige Proben mit einer bestimmten geometrischen Verteilung abzulegen. Die Anwendung dieser Substrate ist auf Kultivierungs- und Analyseverfahren bei Raumtemperatur beschränkt.

Die DE 199 49 735 A1 beschreibt die Erzeugung von Tropfen auf der Oberfläche eines starren Trägersubstrates, auf welchem lyophile Anker zur Bindung der Tropfen angeordnet sind. Die einzelnen Tropfen sollen als Reaktionsbehälter für die Verarbeitung von Probenmengen dienen. Eine Kryokonservierung ist nicht vorgesehen.

Aus der DE 102 37 125 A1 ist ein Verfahren zur Erzeugung gefrorener Probentropfen zur Kryokonservierung bekannt. Demnach werden von einem Tropfengenerator erzeugte Tropfen entweder in der Schwebe oder nach dem Absetzen auf eine hydrophobe Oberfläche durch ein dampf- oder gasförmiges Kühlmedium tiefgefroren.

Aus dem U.S.-Patent 4 531 373 ist ein kontrolliertes Einfrieren von Proben bekannt, bei dem auf einer Oberfläche durch einen Tropfmechanismus Teilproben abgelegt werden. Durch ein Vorbeiführen der Teilproben an wärmeaustauschenden Oberflächen wird ein Einfrieren der Proben erreicht.

Aus US 2003/0124716 A1 ist ein Substrat zur Probenaufnahme bekannt, das aus mehreren übereinander angeordneten, miteinander verbundenen Platten aufgebaut ist. Eine der Platten weist Durchgangslöcher auf, die zusammen mit einer darunter liegenden Platte Kompartimente bilden. Diese Kompartimente dienen der Aufnahme kleiner Flüssigkeitsmengen. Aufgrund des mehrschichtigen Aufbaus kann es beim Einsatz des Substrates bei der Kryokonservierung aufgrund schneller Abkühlung und resultierender steiler Temperaturgradienten zu einer Auflösung der Verbindung zwischen den Platten kommen. Nachteilig ist zudem, dass die Probenvolumina in den Löchern von thermisch isolierendem Kunststoff umgeben sind, was bei der Kryokonservierung zu einer längeren und inhomogenen Abkühlung führt. Ein weiterer Nachteil des herkömmlichen Substrates ist dessen aufwändige Herstellung.

Aus der DE 44 38 232 A1 ist ein Verfahren zur Kryokonservierung von biologischen Zellen bekannt. In diesem Verfahren werden zur lagedefinierten Kryokonservierung einzelner oder in vorgebbarer Zahl zusammengestellter lebender Zellen diese über eine Mikrotropfenschusseinrichtung in einer Umhüllungslösung in Mikrotropfenform auf ein tiefgekühltes Substrat aufgeschossen. Das Substrat wird über ein Kühlmittel temperiert, wobei die zu belegende Oberfläche sich in einer Gasatmosphäre oder im Vakuum befindet. Durch gesteuerte Bewegung entweder des Substrats oder Mikrotropfenschusseinrichtung lassen sich die Mikrotropfen in frei wählbaren oder durch die Substratstrukturierung vorgegeben einzeln und in Mustern aufbringen. Nachteilig bei einem derartigen Verfahren ist, dass die Mikrotropfen über eine Mikrotropfenschusseinrichtung auf das tiefgekühlte Substrat aufgebracht werden müssen. Dieses Auftragsverfahren kann Stress für die Zellen bedeuten, wodurch deren Überlebenswahrscheinlichkeit sinkt. Zudem sind derartige Mikrotropfenschusseinrichtungen aufwendig und erfordern regelmäßige Reinigung.

Die Aufgabe der Erfindung ist es, ein verbessertes Verfahren zur Kryokonservierung biologischer Proben bereitzustellen, mit dem die Nachteile der herkömmlichen Techniken überwunden werden und das einen erweiterten Anwendungsbereich aufweist. Mit dem Verfahren soll insbesondere ermöglicht werden, große Probenvolumen homogen, schonend und reproduzierbar einzufrieren, und eine hohe Flexibilität bei der Anpassung an verschiedene Probenarten oder Kryoprotektiva erreicht werden. Die Aufgabe der Erfindung ist es auch, eine verbesserte Vorrichtung zur Kryokonservierung biologischer Proben, insbesondere zur Durchführung des erfindungsgemäßen Verfahrens bereitzustellen.

Diese Aufgaben werden durch ein Verfahren und eine Vorrichtung mit den Merkmalen der Patentansprüche 1 oder 11 gelöst. Vorteilhafte Ausführungsformen und Anwendungen der Erfindung ergeben sich aus den abhängigen Ansprüchen.

Gemäß einem ersten Gesichtspunkt beruht die vorliegende Erfindung auf der allgemeinen technischen Lehre, bei einem Verfahren zur Kryokonservierung biologischer Proben mit einer Ablage von flüssigen Proben auf einem Substrat und einer Abkühlung der Proben auf dem Substrat bis in den gefrorenen Zustand die Proben auf voneinander getrennten, flüssigkeitsanziehenden Bereichen auf der Oberfläche des Substrates zu sammeln. Die flüssigkeitsanziehenden Bereiche sind mit einer vorbestimmten Form und Verteilung auf der Oberfläche des Substrates voneinander getrennt angeordnet. Zwischen den flüssigkeitsanziehenden Bereiche befinden sich flüssigkeitsabstoßende Bereiche.

Die flüssigkeitsanziehenden Bereiche zeichnen sich allgemein durch eine höhere Hydrophilie und/oder Oleophilie als die flüssigkeitsabstoßenden Bereiche aus. Die flüssigkeitsanziehenden Bereiche sind insbesondere hydrophile und/oder oleophile Bereiche, während die flüssigkeitsabstoßenden Bereiche insbesondere hydrophobe und/oder oleophobe Bereiche umfassen.

Durch die flüssigkeitsanziehende Wirkung bilden sich auf der Oberfläche inselförmige Sammlungsbereiche, an denen die Proben anhaften können.

Vorteilhafterweise sammeln sich die Tropfen entsprechend der geometrischen Anordnung der flüssigkeitsanziehenden Bereiche. Zur Ablage der Proben wird eine Probensuspension mit der Substratoberfläche in Kontakt gebracht. Im Ergebnis bilden sich an den flüssigkeitsanziehenden Bereichen Gebilde, wie zum Beispiel Tropfen oder Fäden, wodurch ohne weitere Maßnahmen die Zerlegung der Probensuspension in einzelne Proben erreicht wird, die anschließend gefroren werden. Im folgenden wird ohne Beschränkung in der Regel auf tropfenförmige Proben Bezug genommen. Die Proben bilden sich im flüssigen Zustand mit einer definierten Form und Größe, so dass mit der Ablage gleichzeitig auch eine genaue und reproduzierbare Dosierung der Proben erreicht wird. Vorteilhafterweise wird damit die Zahl der Verfahrensschritte bei der Kryokonservierung reduziert, was allgemein mit einer Reduzierung von Zellverlusten verbunden ist.

Mit der Erfindung wird eine neue Anwendung oberflächenstrukturierter Substrate für die Kryokonservierung biologischer Proben geschaffen. Die Erfinder haben festgestellt, dass oberflächenstrukturierte Substrate überraschenderweise nicht nur für eine Abkühlung zu Kryokonservierungszwecken, das heißt in dem Temperaturbereich unterhalb von -50 °C geeignet sind, sondern dabei besondere, unerwartete Effekte zeigen. Es wurde festgestellt, dass blatt- oder schichtförmige Substrate, wie zum Beispiel Folien, die bei Raumtemperatur biegsam sind, auch bei der verminderten Kryokonservierungstemperatur ausreichend deformierbar sind, um weitere Verfahrensschritte durchzuführen, die eine Substratkrümmung erfordern, wie zum Beispiel eine schichtweise Packung des Substrats im gekühlten Zustand. Des Weiteren wurde festgestellt, dass sich die Eötvös-Regel zur Temperaturabhängigkeit der Oberflächenspannung in dem betroffenen Temperaturbereich von der Raumtemperatur bis zur Kryokonservierungstemperatur dahingehend positiv auswirkt, dass die Tropfen bei der Abkühlung eine zusätzliche Abschnürung relativ zur Substratoberfläche erfahren, so dass eine Abtrennung der Tropfen vom Substrat im gekühlten Zustand erleichtert wird.

Bei dem erfindungsgemäßen Verfahren ist während der Ablage der Proben aus einem Probenreservoir auf das Substrat eine Relativbewegung zwischen dem Substrat und dem Probenreservoir vorgesehen. Besonders bevorzugt wird das Substrat relativ zum ortsfesten Probenreservoir bewegt, während die Proben auf die Oberfläche des Substrates übertragen werden. Durch die Relativbewegung wird vorteilhafterweise ermöglicht, große Probenmengen unterbrechungsfrei und schnell auf dem Substrat abzulegen.

Ein weiterer wichtiger Vorteil der Erfindung besteht darin, dass die Übertragung der Proben schonend erfolgt, ohne dass kritische Scherkräfte in der Probensuspension oder bei der Ablösung der Proben von der Probensuspension oder voneinander auftreten. Des Weiteren ist eine hohe Flexibilität bei der Auswahl der Art der Tropfenablage gegeben.

Gemäß einer ersten Variante erfolgt die Übertragung der Proben auf die Substratoberfläche, indem diese in das Probenreservoir eingetaucht wird. Beim Tauchen wird die Substratoberfläche für eine vorbestimmte Tauchzeit in die Probensuspension in dem Probenreservoir eingeführt. Durch die flüssigkeitsanziehende Wirkung der auf der Oberfläche vorgesehenen Sammlungsbereiche verteilen sich die Proben als getrennte Tropfen oder Fäden auf dem Substrat. Vorteilhafterweise genügt eine kurze Tauchzeit im Bereich von zum Beispiel 0.1 s bis 10 s. Damit wird ermöglicht, dass die Ablage der Proben erfolgen kann, indem das Substrat durch die Probensuspension in dem Probenreservoir hindurch gezogen wird, wobei ein kontinuierlicher Ablagevorgang mit einer hohen Ablagegeschwindigkeit realisiert werden kann.

Gemäß einer weiteren Variante erfolgt die Übertragung der Proben auf die Substratoberfläche, indem die Probensuspension auf die Substratoberfläche aufgetragen, zum Beispiel gegossen oder aufgetropft wird. Beim Auftragen wird die Substratoberfläche mit der Probensuspension aus dem Probenreservoir teilweise oder vollständig überdeckt. Zum Auftragen wird ein Flüssigkeitsförderwerkzeug verwendet. Die Übertragung der Probe von dem Flüssigkeitsförderwerkzeug auf das Substrat kann unter der Wirkung der Schwerkraft oder zusätzlich unterstützt durch einen Förderdruck erfolgen.

Vorzugsweise ist den Proben ein Kryoprotektivum zugesetzt, um Kälteschäden beim Einfriervorgang zu verhindern. Als Kryoprotektivum kann jede Substanz oder Zusammensetzung von mehreren Substanzen verwendet werden, die eine Kristallbildung in den Proben beim Einfrieren verhindert, wie zum Beispiel Dimethylsulfoxid (DMSO), Glycerol oder Zuckermoleküle. Gemäß einer ersten Variante wird das Kryoprotektivum der Probensuspension, zum Beispiel im Probenreservoir zugesetzt, bevor die Proben vereinzelt auf dem Substrat abgelegt werden. Vorteilhafterweise wird dadurch das Verfahren der Ablage der Tropfen und des Einfrierens vereinfacht. Wenn gemäß einer zweiten Variante das Kryoprotektivum den Proben nach deren Ablage auf dem Substrat zugesetzt wird, so kann eine gegebenenfalls ungünstige Wirkung des Kryoprotektivums für die Proben vermindert werden, da unmittelbar nach der Zugabe des Kryoprotektivums die Proben eingefroren werden.

Ein besonderer Vorteil der erfindungsgemäßen Ablage einer Vielzahl einzelner tropfenförmiger Proben auf dem modifizierten Substrat besteht darin, dass eine große Probenoberfläche geschaffen wird. Über die große Oberfläche kann zeitgleich das Kryoprotektivum in alle Probentropfen hinein diffundieren. Diese Diffusion kann gemäß einer vorteilhaften Ausführungsform der Erfindung von der Oberfläche des Substrates her erfolgen. Hierzu ist das Kryoprotektivum in den flüssigkeitsanziehenden Bereichen im absorbierten Zustand enthalten. Für diese Zwecke eignen sich insbesondere die folgenden Kryoprotektiva: Zucker (z. B. Trehalose, Aminosäuren, DMSO). Gemäß einer abgewandelten Ausführungsform der Erfindung erfolgt die Diffusion des Kryoprotektivums über die freie Oberfläche der tropfenförmigen Proben, auf die das Kryoprotektivum durch ein Sprühen oder einen anderen Flüssigkeitskontakt aufgebracht wird. Vorteilhafterweise ist damit eine größere Flexibilität bei der Auswahl des Kryoprotektivums gegeben.

Wenn gemäß einer weiteren bevorzugten Ausführungsform der Erfindung mindestens eine Messung zur Erfassung von mindestens einer Eigenschaft der auf dem Substrat abgelegten Proben vorgesehen ist, können sich Vorteile für die folgende Steuerung des Abkühlens des Substrats mit den Proben ergeben. Beispielsweise kann durch die Messung die Größe, die chemische Zusammensetzung und/oder eine physikalische Eigenschaft, wie zum Beispiel die elektrische Leitfähigkeit der Proben gemessen werden. In Abhängigkeit von dem Messergebnis können z. B. die Auswahl des Kryoprotektivums oder von dessen Menge, eine vorbestimmte Abkühlgeschwindigkeit und/oder weitere Verfahrensschritte vorgesehen sein. Die Messung ist vorzugsweise eine berührungslose Messung, wie zum Beispiel eine optische Messung.

Zur Abkühlung kann jede an sich verfügbare Kühltechnik, zum Beispiel mit flüssigem Stickstoff, dem Dampf flüssigen Stickstoffs und/oder einem Wärmetauscher verwendet werden. Die Abkühlung kann zeitlich getrennt nach der Ablage der Proben oder gleichzeitig mit der Ablage (insbesondere dem Auftragen) der Proben erfolgen.

Eine weitere bevorzugte Ausführungsform der Erfindung zeichnet sich dadurch aus, dass die gefrorenen Proben nach der Abkühlung in einen Lagerzustand gebracht werden. Der Lagerzustand umfasst geometrische und thermische Lagerungsbedingungen, unter denen die Proben dauerhaft aufbewahrt werden können. Durch die Überführung der gefrorenen Proben in den Lagerzustand wird das Kryokonservierungsergebnis des erfindungsgemäßen Verfahrens vorteilhafterweise weiter stabilisiert. Wenn die Überführung in den Lagerzustand eine Trennung der gefrorenen Proben vom Substrat umfasst, so können sich die folgenden Vorteile ergeben. Erstens können die gefrorenen Proben im Lagerzustand mit einer dichten Packung aufbewahrt werden. Die gefrorenen Proben nehmen im Lagerzustand ein Volumen ein, welches nur unwesentlich größer als das Volumen der flüssigen Probensuspension vor der Kryokonservierung ist. Da die Proben im Lagerzustand gefroren sind, liegen sie nach der Trennung von dem Substrat als Partikel mit abgerundeten Oberflächen vor. Falls eine unerwünschte Erwärmung der gefrorenen Proben, zum Beispiel in Folge eines Kühlungsausfalls bei der Lagerung auftritt, würden die Proben an ihren Oberflächen oder komplett verschmelzen, was bei einer Qualitätskontrolle sofort feststellbar ist. Die Lagerung der gefrorenen Proben in einem vom Substrat getrennten Zustand ermöglicht damit eine effektive Qualitätskontrolle.

Gemäß einer alternativen Variante umfasst die Überführung der Proben in den Lagerzustand eine mehrlagige Packung des Substrats. In diesem Fall ist zwar das Gesamtvolumen bei der Lagerung vergrößert, es werden jedoch weitere Vorteile in Bezug auf die zumindest einseitige Abdeckung der Proben durch das Substrat erreicht. Die Packung im Lagerzustand wird erreicht, indem das Substrat beispielweise geschichtet oder aufgewickelt wird. Überraschenderweise sind die erfindungsgemäß verwendeten, schicht- oder blattförmigen Substrate, wie zum Beispiel Folien geeignet, selbst im tiefgefrorenen Zustand eine Krümmung oder Wicklung bruchfrei zu tolerieren.

Ein weiterer Vorteil der Erfindung ist durch die hohe Variabilität der geometrischen Verteilung der Flüssigkeit anziehenden Bereiche auf der Substratoberfläche gegeben. Die Form, Größen und Verteilung der flüssigkeitsanziehenden Bereiche kann in Abhängigkeit von der aktuellen Konservierungsaufgabe gewählt sein. Besonders bevorzugt weisen die flüssigkeitsanziehenden Bereiche eine Größe derart auf, dass die anhaftende Probe einen Tropfen oder einen Faden entlang der Substratoberfläche bildet. In diesem Fall werden die flüssigkeitanziehenden Bereiche punktförmig oder linienförmig genannt. Alternativ können die flüssigkeitsanziehenden Bereiche ausgedehnte Inseln mit einer Flächenform bilden, auf der sich die Probe schichtförmig abscheidet. Die flüssigkeitsanziehenden Bereiche bilden ein bestimmtes Muster auf der Substratoberfläche.

Gemäß einer weiteren bevorzugten Variante der Erfindung kann das Muster eine bestimmte Information repräsentieren. Ein Muster kann zum Beispiel eine visuell oder optisch auslösbare Information, wie zum Beispiel ein Pixelbild oder einen Strichcode darstellen. Vorteilhafterweise wird dadurch eine fehlerfreie Identifizierung der Proben in Verbindung mit Substrat im Lagerzustand erreicht.

Gemäß einem zweiten Gesichtspunkt beruht die vorstehende Erfindung auf der allgemeinen technischen Lehre, eine Vorrichtung zur Kryokonservierung biologischer Proben mit einem Substrat und einer Kühleinrichtung bereitzustellen, bei der das Substrat eine modifizierte Oberfläche mit voneinander getrennten, flüssigkeitsanziehenden Bereichen aufweist. Vorzugsweise ist das Substrat in Kombination mit einem Probenreservoir, von dem die Proben auf das Substrat überführbar sind, und mit der Kühleinrichtung ein Teil der Kryokonservierungsvorrichtung. Mit dem Substrat werden mehrere Funktionen erfüllt, nämlich sowohl die Aufnahme der Proben und als auch deren Verteilung und Dosierung. Mit der erfindungsgemäßen Kryokonservierungsvorrichtung können die Trennung der einzelnen Proben aus einer Probensuspension und deren Ablage vorteilhafterweise mit einem einzigen Schritt durchgeführt werden.

Wenn große Substrate zur Aufnahme von Proben im ml- bis 1-Bereich verwendet werden, erfolgt bei der Ablage vorzugsweise eine Bewegung des Substrats relativ zu dem Probenreservoir. Hierzu ist gemäß einer bevorzugten Ausführungsform der Erfindung die Kryokonservierungsvorrichtung mit einer Antriebseinrichtung für das Substrat ausgestattet. Die Antriebseinrichtung ermöglicht eine vorbestimmte Steuerung der Substratbewegung, insbesondere der Substratgeschwindigkeit in Abhängigkeit von viskoselastischen Eigenschaften der Probe.

Zur Realisierung der oben genannten Ablagetechniken mittels Eintauchen oder Ausgießen ist als Probenreservoir vorzugsweise ein Tauchgefäß oder ein Gießgefäß vorgesehen. Wenn das Gießgefäß gemäß einer bevorzugten Variante der Erfindung mit einem Flüssigkeitsförderwerkzeug ausgestattet ist, kann die Probensuspension schonend bis auf die Oberfläche des Substrats geführt werden. Das Flüssigkeitsförderwerkzeug umfasst vorzugsweise einen Schlitzgießer oder eine Tropfendispenser, wie z. B. eine Pipettenanordnung. Die Verwendung des Schlitzgießers hat den Vorteil, dass die Substratoberfläche homogen mit der Probensuspension in Kontakt gebracht wird, so dass sich die Proben entsprechend der Verteilung der flüssigkeitsanziehenden Bereiche sammeln können. Die Verwendung des Tropfendispensers, bei dem z. B. Pipetten vorzugsweise entsprechend der Verteilung der flüssigkeitsanziehenden Bereiche ausgerichtet sind, hat den Vorteil, dass die Probensuspension überwiegend dort auf das Substrat aufgebracht wird, wo die flüssigkeitsanziehenden Bereiche sind. Damit wird die Effektivität der Probenablage gesteigert.

Zur Zuführung des Kryoprotektivums ist die erfindungsgemäße Kryokonservierungsvorrichtung gemäß einer bevorzugten Ausführungsform der Erfindung mit einer Dosiereinrichtung ausgestattet, mit der vorteilhafterweise die Menge und/oder der Zeitpunkt der Zuführung des Kryoprotektivums einstellbar ist. Vorzugsweise umfasst die Dosiereinrichtung eine Sprüheinrichtung, mit der vorteilhafterweise die gesamte freie Oberfläche der einzelnen Proben auf der Substratoberfläche erreicht wird, eine Gießeinrichtung, mit der vorteilhafterweise das Kryoprotektivum wie die Probensuspension auf die Substratoberfläche aufgebracht werden kann, oder eine Schiebereinrichtung, die eine mechanische Zusammenführung von Probentropfen und Tropfen des Kryoprotektivums ermöglicht.

Weitere wichtige Komponenten der Kryokonservierungsvorrichtung, die einzeln oder in Kombination vorgesehen sein können, umfassen eine Messeinrichtung zur Messung von mindestens einer Probeneigenschaft, eine Trenneinrichtung, mit der die gefrorenen Proben vom Substrat trennbar und in einen Lagerzustand überführbar sind, und eine Packungseinrichtung zur mehrlagigen Packung des Substrats mit den gefrorenen Proben.

Ein unabhängiger Gegenstand der Erfindung ist die Verwendung eines Substrates, dessen Oberfläche voneinander getrennte, flüssigkeitsanziehende Bereiche aufweist, zwischen denen flüssigkeitsabstoßende Bereiche vorgesehen sind, zur Kryokonservierung biologischer Proben, insbesondere von Blutproben. Die Erfinder haben festgestellt, dass die Ablage der Proben auf den erfindungsgemäß verwendeten Substraten besonders stressarm und schonend erfolgt, so dass für hochempfindliche Zellen, die im Blut enthalten sind, eine hohe Überlebensrate gewährleistet ist, die mit den herkömmlichen Kryokonservierungsverfahren für Blutproben nicht erreichbar ist.

Die Erfindung weist die folgenden weiteren Vorteile auf. Durch die Benutzung von Folien oder anderweitigen Oberflächen mit additiv, in Mustern aufgebrachten, extrem miniaturisierten hydrophilen Beschichtungen werden die Nachteile der herkömmlichen Techniken durch eine schonende, stressarme Trennung der Proben von einer Probensuspension überwunden. Die Proben werden z. B. tropfenförmig in Mustern mit einer extrem hohen Ablagedichte angeordnet. Durch das Eintauchen, ein anderweitiges Befeuchten oder Vergießen der Probensuspension wird eine Tropfenbildung mit einem extremen Randwinkel ermöglicht. Es können nahezu kugelförmige Probentropfen gebildet werden, deren Größe durch die Größe der flüssigkeitsanziehenden Bereiche im Bereich von einigen Millimetern bis zu einigen Mikrometern einstellbar ist. Die Tropfenbildung an den Grenzen zwischen hydrophilen und hydrophoben (oder entsprechend oleophilen und oleophoben) Bereichen stellt eine stressarme Form für die automatische und technisch extrem vereinfachte Fraktionierung der Probensuspension dar.

Mit der erfindungsgemäß verwendeten Probenablage werden vorteilhafterweise definierte Bruchgrenzen zwischen den Probentropfen und dem Substrat geschaffen, an denen die tropfenförmigen Proben im tiefgefrorenen Zustand in Festkörperform abgelöst werden können. Gleichzeitig mit der Tropfenbildung wird auch die Aufgabe der schonenden und gleichmäßigen Zumischung von Kryoprotektiva in einem Prozessschritt gelöst.

Weitere Vorteile bestehen in der Musterbildung und reproduzierbaren Tropfengröße durch die Feinstrukturierung der Substratoberflächen, der Automatisierbarkeit des gesamten Verfahrens, der Wahrung steriler Bedingungen während aller Prozessschritte, der Steuerung der Haftfestigkeit der tropfenförmigen Proben durch die Einstellung vorbestimmter Oberflächeneigenschaften in den flüssigkeitsanziehenden Bereichen, der leichten Ablösbarkeit der gefrorenen Proben der Fähigkeit zur extrem schnellen und hochparallelen Probenablage bei geringem technischen Aufwand und der Minimierung des hydrodynamischen und mechanischen Stresses auf die Proben.

Des Weiteren haben sich die folgenden Ausführungsformen der Erfindung als vorteilhaft erwiesen.

Es wird vorzugsweise ein einstückig gebildetes Substrat verwendet. Besonders bevorzugt ist das Substrat so gebildet, dass in der unmittelbaren Umgebung der flüssigkeitsanziehenden Bereiche keine Fügestellen vorhanden sind.

Gemäß einem weiteren vorteilhaften Merkmal weist das Substrat eine ebene, insbesondere gleichmäßig flache oder glatte Oberfläche auf, auf oder in der die flüssigkeitsanziehenden Bereiche gebildet sind. Die Oberfläche weist keine Vorsprünge, Vertiefungen oder Hinterschneidungen auf. Gemäß einer Alternative weist das Substrat als flüssigkeitsanziehende Bereiche Strukturierungen auf, die durch Umformen gebildet sind, beispielsweise durch Prägen. Vorteilhaft am Strukturieren durch Umformen ist, dass keine Fügestellen entstehen. Die Strukturierungen sind beispielsweise Vertiefungen wie Näpfe oder Grübchen.

Das Substrat ist bevorzugt tieftemperaturflexibel. Insbesondere ist das Substrat bei -50°C noch flexibel, bevorzugt bei - 70°C oder sogar noch bei -90°C.

Das Substrat der erfindungsgemäßen Vorrichtung ist eine Folie. Bevorzugt ist das Substrat eine Folienbahn mit einer Längsausdehnung, welche die Breite der Folienbahn wesentlich übersteigt. Beispielsweise beträgt die Länge mehr als das Zehnfache, insbesondere mehr als das Fünfzigfache der Breite.

Bevorzugt sind die flüssigkeitsanziehenden und/oder die flüssigkeitsabstoßenden Bereiche des Substrats so gebildet, dass sich die biologischen Proben im Wesentlichen vollständig auf den flüssigkeitsanziehenden Bereichen sammeln. Die Verteilung der Proben erfolgt vorzugsweise selbstorganisierend, d. h. ohne die Verwendung eines Werkzeugs, wie z. B. eines Abstreichwerkzeugs. Nach einer flächigen Benetzung des Substrates sammeln sich die biologischen Proben von selbst auf den flüssigkeitsanziehenden Bereichen, während die flüssigkeitsabstoßenden Bereiche frei liegen.

Weitere Einzelheiten und Vorteile der Erfindung werden aus der folgenden Beschreibung bevorzugter Ausführungsformen unter Bezug auf die beigefügten Zeichnungen ersichtlich. Es zeigen:
- Figur 1:: eine Illustration wichtiger Merkmale einer ersten Ausführungsform des erfindungsgemäßen Verfahrens zur Kryokonservierung;
- Figuren 2 bis 4:: Illustrationen von Einzelheiten der Ablage tropfenförmiger Proben auf einem erfindungsgemäß verwendeten Substrat;
- Figur 5:: eine schematische Darstellung einer Ausführungsform einer erfindungsgemäßen Vorrichtung zur Kryokonservierung biologischer Proben;
- Figur 6:: Illustrationen von Einzelheiten der Trennung gefrorener Proben von dem erfindungsgemäß verwendeten Substrat;
- Figuren 7 bis 12:: Illustrationen von Merkmalen weiterer Ausführungsformen des erfindungsgemäßen Verfahrens zur Kryokonservierung biologischer Proben;
- Figur 13:: Illustrationen verschiedener Varianten der mehrlagigen Packung des erfindungsgemäßen verwendeten Substrates;
- Figur 14:: eine schematische Illustration der Abdeckung eines erfindungsgemäßen verwendeten Substrates; und
- Figuren 15 und 16:: Illustrationen von Messungen in der erfindungsgemäßen Kryokonservierungsvorrichtung und an erfindungsgemäß abgelegten Kryoproben.

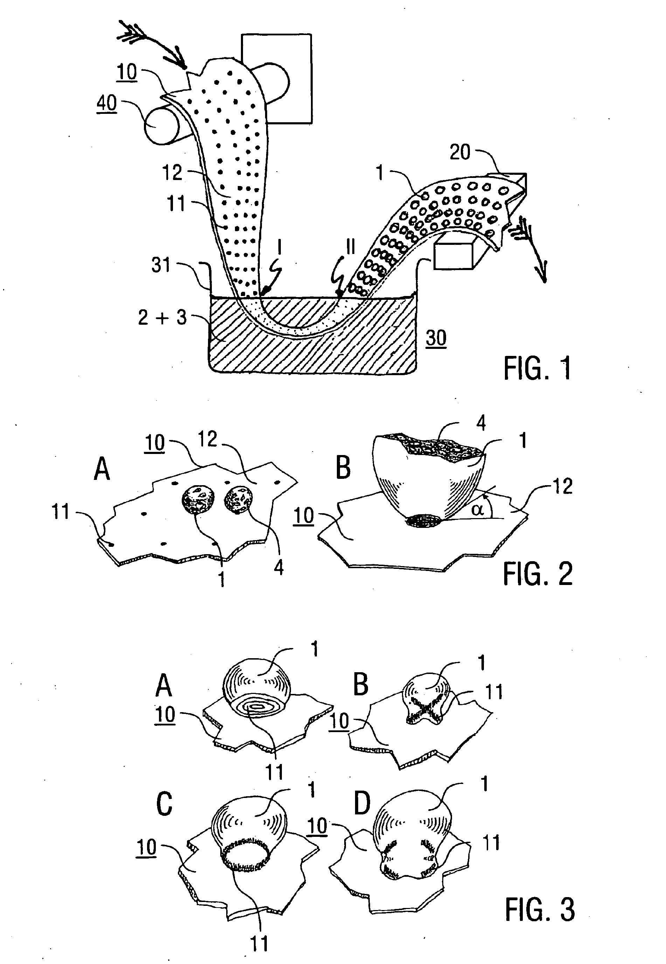

Figur 1 zeigt in schematischer, zum Teil perspektivischer Ansicht die erfindungsgemäße Kombination der Ablage und Abkühlung von Proben 1 auf einem Substrat 10. Das Substrat 10 wird bei einem kontinuierlichen Kryokonservierungsverfahren als Endlosmaterial von einer Rolle (nicht dargestellt) mit einer Antriebseinrichtung 40 zum Probenreservoir 30 befördert. Die Antriebseinrichtung 40 umfasst eine schematisch gezeigte Walzenvorrichtung, mit der das Substrat 10 vorwärts bewegt wird. Das Probenreservoir 30 umfasst ein Tauchgefäß 31, in dem die Probensuspension 2 und ein Kryoprotektivum 3 homogen vermischt angeordnet sind.

Das Substrat 10 wird in die Probensuspension 2 mit dem Kryoprotektivum 3 eingetaucht. Beim Eintauchen erfolgt zunächst ein erster Grenzflächenübergang I, bei dem die Substratoberfläche von einer gasförmigen in eine flüssige Umgebung überführt wird. Die Oberfläche des Substrates 10 wird benetzt. Beim Herausziehen erfolgt ein weiterer Grenzflächenübergang II, bei dem die Substratoberfläche von einer flüssigen Umgebung in die gasförmige Umgebung zurückgeführt wird. Bei dieser Gelegenheit wird die Probensuspension 2 in die einzelnen, voneinander getrennten, tropfenförmigen Proben 1 fraktioniert. Die Proben 1 sind entsprechend der Verteilung von hydrophilen Bereiche 11 auf der Oberfläche des Substrats 10 angeordnet.

Vom Probenreservoir 30 wird das Substrat 10 zur schematisch gezeigten Kühleinrichtung 20 transportiert, wo die auf der Oberfläche des Substrates 10 angeordneten, tropfenförmigen Proben 1 eingefroren werden. An der Kühleinrichtung 20 werden die Proben durch Beaufschlagung mit dem Dampf des flüssigen Stickstoffs auf eine Kryokonservierungstemperatur von weniger als - 50 °C, z. B. auf - 130 °C abgekühlt.

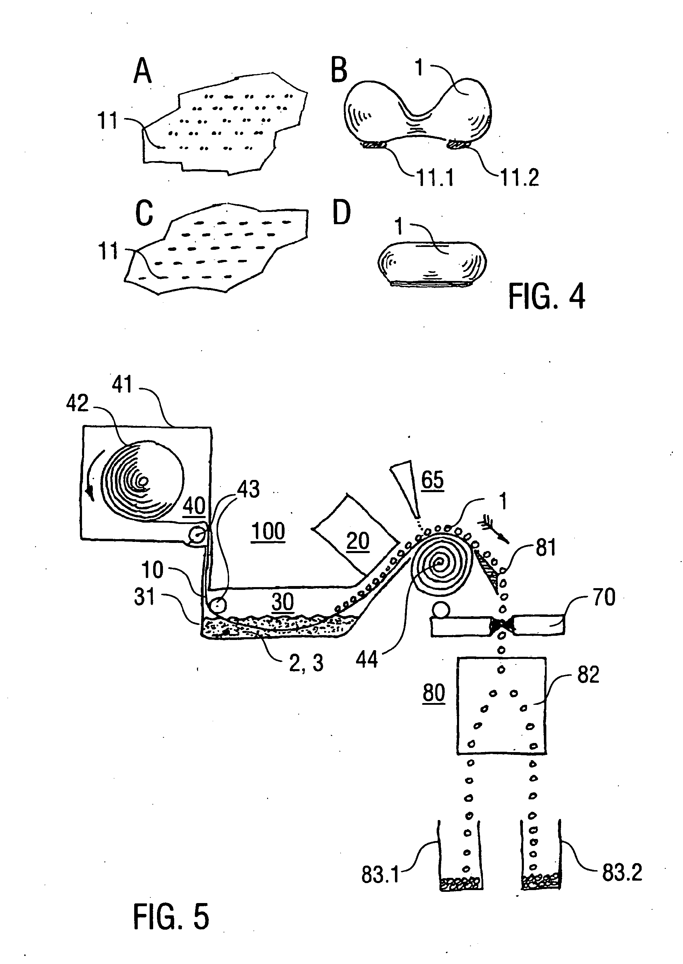

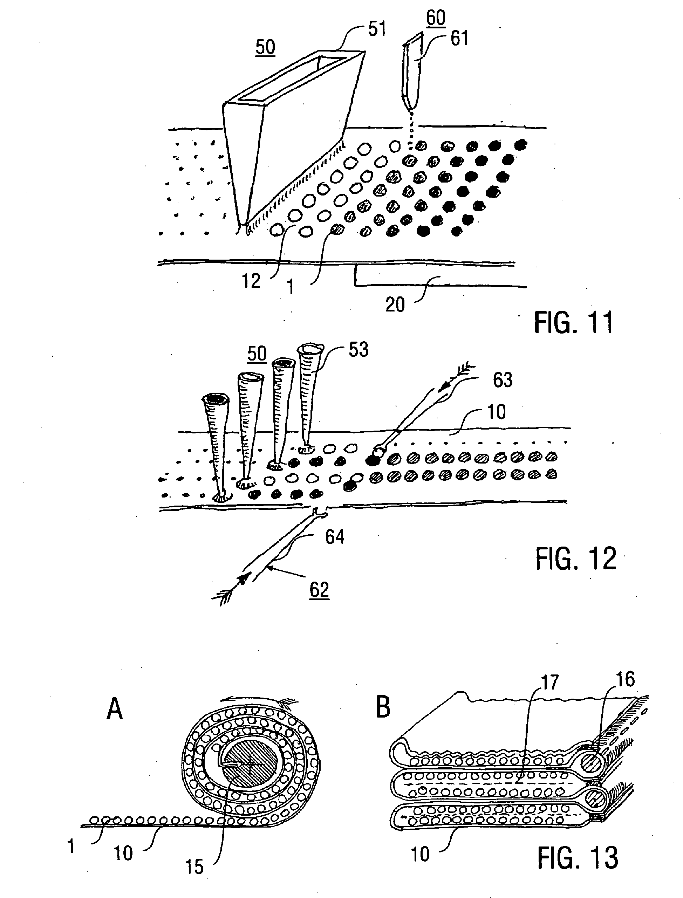

Anschließend folgt der weitere Transport des Substrates 10 zur Überführung der Proben in einen Lagerzustand im abgetrennten (Figuren 5, 9, 10) oder dem gepackten (Figur 13) Zustand.

Das Substrat 10 ist zum Beispiel ein Folienband aus Polyethylen mit einer Breite von 10 cm. Zur Ablage einer Probensuspension, zum Beispiel Blut oder eine Zellsuspension mit Stammzellen, mit einem Volumen von 100 ml werden bei einem Tropfendurchmesser von 1 mm und einem Tropfenabstand von 1 mm das Folienband mit einer Länge von rund 8 m benötigt. Auf dieser Länge lassen sich die 100 ml Probensuspension in ca. 200.000 Tropfen zerlegt ablegen. Wenn kleinere Tropfendurchmesser gewünscht sind, werden entsprechend längere und/oder breitere Bänder benötigt.

Auf der Oberfläche des Substrates 10 sind hydrophile Bereiche 11 gebildet (Einzelheiten siehe Figuren 2, 3), die durch hydrophobe Bereiche 12 voneinander getrennt sind. Die hydrophilen Bereiche 11 umfassen eine chemische und/oder eine geometrisch-strukturelle Modifizierung der Substratoberfläche. Zur chemischen Modifizierung sind an sich bekannte hydrophile Substanzen auf der Substratoberfläche aufgebracht oder die Subtratoberfläche durch eine Oberflächenbehandlung (zum Beispiel Laserbehandlung) in einen hydrophilen Zustand umgewandelt. Die geometrisch-strukturelle Modifizierung umfasst zum Beispiel eine Strukturierung mit Vorsprüngen der Substratoberfläche, die typische Dimensionen im nm- bis µm-Bereich aufweisen. Wie die Substratoberfläche in den Bereichen 11 hydrophil ausgestattet wird, ist dem Fachmann an sich bekannt. Die konkret verwendete Modifizierung, die Form und die Größe der hydrophilen Bereiche 11 können in Abhängigkeit von der konkreten Kryokonservierungsaufgabe und den verwendeten Materialien des Substrates 10 und der Probensuspension gewählt werden.

Die Figuren 2A und 2B illustrieren Einzelheiten der Tropfenablage auf dem Substrat 10. Figur 2A zeigt einen Ausschnitt des Substrats 10 (zum Beispiel gemäß Figur 1) mit den punktförmigen hydrophilen Bereichen 11, die durch die hydrophoben Bereiche 12 voneinander getrennt sind. Die hydrophilen Bereiche 11 haben einen Durchmesser von z. B. 1 bis 500 µm. Die Proben 1 enthalten lebende biologische Zellen 4 (schematisch illustriert) in einer wässrigen Umhüllungslösung (zum Beispiel Zellkulturmedium und/oder physiologische Lösung, gegebenenfalls mit einem Kryoprotektivum). Das Eintauchen des Substrats 10 in die Probensuspension (siehe Figur 1) führt zu der Benetzung der hydrophilen Bereiche 11, so dass die tropfenförmigen Proben 1 exakt an den Positionen der hydrophilen Bereiche 11 angeordnet sind. Der Grenzwinkel α zwischen der Substratoberfläche und der Tropfenoberfläche liegt z. B. im Bereich von 5° bis 50°.

Die Umgebung der hydrophilen Bereiche 11 ist vorzugsweise stark hydrophob oder superhydrophob, wie es sich durch eine Nanostrukturierung oder eine Hydrophobisierung der Bereiche 12 erreichen lässt. Figur 2B zeigt einen einzelnen Tropfen der Probe 1 (angeschnitten illustriert) auf der Oberfläche des Substrates 10. Der hydrophile Bereich 11 des Substrates 10 kann homogen z. B. durch eine Oberflächenmodifizierung oder inhomogen aus geometrisch sich unterscheidenden Teilbereichen verschiedener, zum Beispiel auch gegensätzlicher Benetzbarkeit gebildet sein. Dadurch lassen sich vorteilhafterweise relativ große hydrophile Bereiche 11 bereit stellen, die sich dennoch durch eine geringe Anhaftfläche der Probe 1 am Substrat 10 auszeichnen (siehe auch Figur 3).

Die Figuren 3A bis 3B illustrieren schematisch vier Beispiele für die Ausprägung hydrophiler Bereiche 11 auf dem Substrat 10, wie sie zur Erzeugung von tropfenförmigen Proben 1 mit einer möglichst geringen Anhaftfläche geeignet sind. Gemäß Figur 3A ist eine konzentrische Anordnung ringförmiger Teilbereiche vorgesehen, die abwechselnd hydrophil und hydrophob sind. Figur 3B zeigt den hydrophilen Bereich 11, der durch abstehende Nanoelemente (Zylinder, Partikel oder dergleichen) gebildet wird, als kreuzförmige Fläche. Diese Variante erleichtert vorteilhafterweise die Ablösbarkeit des gefrorenen Tropfens, da durch die Kreuzform Oberflächenspannungen im Tropfen gebildet werden. Entsprechende Wirkungen lassen sich auch mit den in den Figuren 3C und 3D gezeigten Varianten erreichen.

Figur 4 illustriert, dass die Form der einzelnen Proben 1 nicht kugelförmig sein muss. Wenn die hydrophilen Bereiche 11 gemäß Figur 4A zwei benachbarte, jedoch voneinander getrennte hydrophile Inseln 11.1, 11.2 umfasst, so ergibt sich die in Figur 4B gezeigte Hantelform der Probe 1. Vorteilhafterweise wird durch diese Strukturierung der hydrophilen Bereiche 11 die Anhaftfläche zwischen der Probe 1 und dem Substrat verringert und die Abtrennbarkeit der Probe 1 verbessert. Eine entsprechende Wirkung ergibt sich bei linienförmigen hydrophilen Bereichen 11 gemäß Figur 4C mit entsprechend longitudinal verlängerten, tropfenförmigen Proben 1 gemäß Figur 4D.

In Figur 5 ist eine erste Ausführungsform einer erfindungsgemäßen Kryokonservierungsvorrichtung 100 illustriert, bei der die Probenablage durch ein Eintauchen des Substrates 10 in das Tauchgefäß 31 des Probenreservoirs 30 erfolgt. Die Kryokonservierungseinrichtung 100 umfasst des Weiteren die Antriebseinrichtung 40, die Kühleinrichtung 20, eine Depositionseinrichtung 65 zur Zuführung einer Zusatzsubstanz, eine Trenneinrichtung 80 mit einem Trennwerkzeug 81 zur Ablösung der gefrorenen Proben 1 vom Substrat 10, einer Sortiereinrichtung 82 und Auffanggefäßen 83.1, 83.2, und eine Messeinrichtung 70 zu Erfassung von Eigenschaften der gefrorenen Proben 1.

Die Antriebseinrichtung 40 umfasst einen Vorratsbehälter 41 zur Aufnahme einer Rolle 42 mit dem aufgewickelten Substrat 10, mehrere Umlenkwalzen 43 zur Führung des Substrates 10 in das Tauchgefäß 31 und eine Antriebs- und Aufnahmewalze 44, mit der das Substrat 10 von der Rolle 42 durch das Tauchgefäß 31 gezogen und nach der Abtrennung der gefrorenen Proben 1 aufgewickelt wird.

Das Substrat 10 umfasst ein Folienband mit einer vorbestimmten Oberflächenmodifizierung zur Bildung der hydrophilen Bereiche. Das Substrat 10 ist steril in dem Vorratsbehälter 41 angeordnet. Entlang der Führung über die Umlenkwalzen 42 und durch das Tauchgefäß 31 bis zur Antriebs- und Aufnahmewalze 43 sind ebenfalls sterile Bedingungen gegeben. Im Tauchgefäß 31 befindet sich eine Probensuspension 2, wie zum Beispiel eine Blutprobe, die kryokonserviert werden soll. In dem Tauchgefäß 31 ist die Probensuspension gemeinsam mit dem Kryoprotektivum 3 enthalten, so dass die bei Austritt des Substrats 10 auf den hydrophilen Bereichen sich sammelnden Tropfen bereits das Kryoprotektivum enthalten. Wenn das Substrat 10 aus der Probensuspension 2 austritt, sammeln sich die tropfenförmigen Proben 1 auf der Oberfläche des Substrates 10. Unmittelbar nach der Sammlung der Proben 1 an den hydrophilen Bereichen auf der Substratoberfläche erfolgt die Abkühlung in den gefrorenen Zustand.

Die Kühleinrichtung 20 kühlt die Proben 1, wie es an sich von der Kryokonservierungtechnik bekannt ist, zum Beispiel mit Stickstoffdampf der Temperatur - 150 ° C. Des Weiteren kann die Kühleinrichtung 20 zur Durchführung vorgebbarer Temperaturprogramme eingerichtet sein.

Gemäß einer abgewandelten Ausführungsform der Kryokonservierungsvorrichtung kann zwischen dem Austritt des Substrats 10 aus der Probensuspension 2 und der Kühleinrichtung 20 eine Temperiereinrichtung (nicht dargestellt) vorgesehen, mit der die Temperatur der an den hydrophilen Bereichen gesammelten Proben zunächst erhöht wird, um in vorbestimmter Weise Probenlösung zu verdampfen und die Tropfengröße zu verringern.

Nach dem Einfriervorgang an der Kühleinrichtung 20 können an der Depositionseinrichtung 65 weitere Lösungen auf die gefrorenen Proben 1 aufgesprüht werden. Diese Lösungen dienen beispielsweise der Behandlung der Proben 1 nach dem Auftauen, zum Beispiel der Verdünnung der Umgebungslösung, so dass die Konzentration des Kryoprotektivums in den aufgetauten Proben möglichst verringert wird.

Durch die Zusammenwirkung des Trennwerkzeugs 81 und des sich krümmenden Substrats 10 werden die gefrorenen Proben 1 von der Oberfläche des Substrats 10 abgelöst, das auf der Antriebs- und Aufnahmewalze 44 aufgewickelt und gegebenenfalls erneut verwendet wird. Die gefrorenen Proben 1 werden mit dem Trennwerkzeug 81 an der Messeinrichtung 70 vorbeigeleitet.

Die Messeinrichtung 70 umfasst optische Detektoren, mit denen zum Beispiel durch eine Streulichtmessung erfasst werden kann, ob und wie viele Zellen in den einzelnen gefrorenen Proben 1 enthalten sind. Die Sortiereinrichtung 82 wird in Abhängigkeit von Messsignalen der Messeinrichtung 70 derart gesteuert, dass bestimmte Proben, welche die gesuchten biologischen Zellen enthalten, in das erste Auffanggefäß 83.1 gelenkt werden, während andere Proben, die keine Zellen enthalten, in das zweite Auffanggefäß 83.2 fallen. Die Sortierung in der Sortiereinrichtung 82 erfolgt beispielsweise mit einer pulsförmig betätigbaren Druckluftquelle, mit der in Abhängigkeit von dem Messsignal der Messeinrichtung 70 die Proben auf einen Pfad zu einem der Auffanggefäße 83.1, 83.2 abgelenkt werden. Nach der Ablage in dem Auffanggefäß 83.1 wird dieses zur weiteren Verwendung oder zur Kryolagerung in einer Kryobank transportiert.

Die Messeinrichtung 70 kann alternativ beispielsweise dazu vorgesehen sein, die von dem Substrat abgetrennten Proben 1 in Abhängigkeit von ihrer Position in verschiedene Auffanggefäße zu sortieren. Die auf dem Substrat 10 in verschiedenen Positionen, insbesondere in verschiedenen Reihen entlang der Längsausdehnung des Folienbandes angeordneten Proben können zum Beispiel durch verschiedene Zusatzstoffe aus der Depositionseinrichtung 65 unterschieden werden.

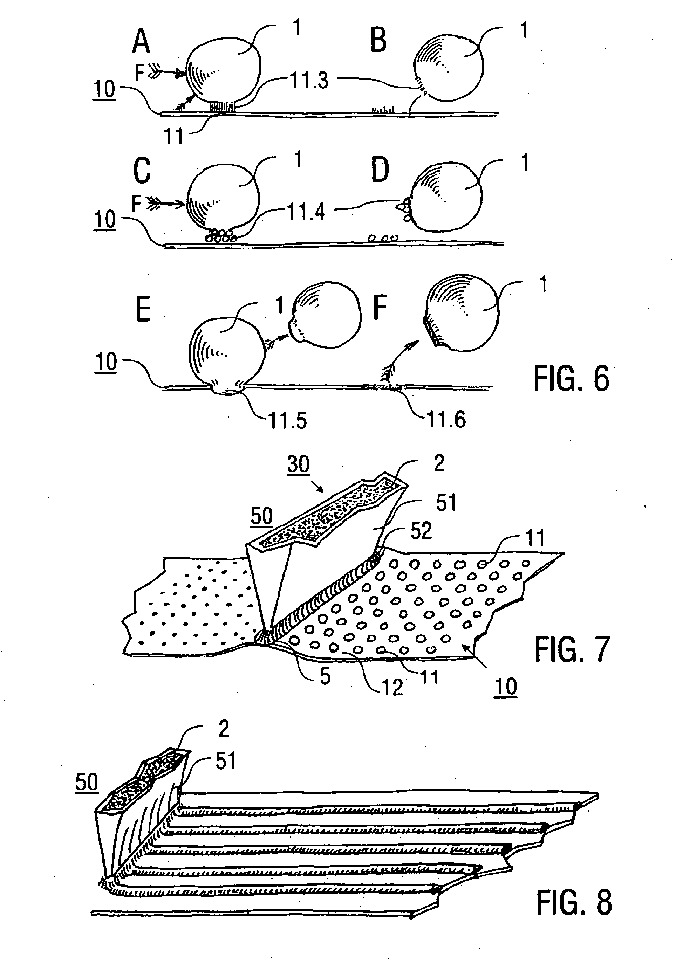

Weitere Einzelheiten der Wirkung des Trennwerkzeugs 81 sind in Figur 6A bis 6F gezeigt. Figur 6A zeigt die gefrorene Probe 1 im anhaftenden und gefrorenen Zustand auf dem hydrophilen Bereich 11 des Substrates 10. Der hydrophile Bereich 11 ist mit stäbchenförmigen Elementen 11.3 typischer Größen im Bereich von nm oder µm gezeigt. Alternativ könnten kugelförmige oder anders geometrisch geformte Elemente vorgesehen sein. Wirkt eine Kraft F auf die Probe 1, so lösen sich die Elemente 11.3 vom hydrophilen Bereich 11 ab. Die Ablösung erfolgt beispielsweise durch Abbrechen unter der Wirkung einer Schnittkante des Werkzeugs 81 (Figur 5). Im Ergebnis (Figur 6B) verbleiben Teile der abgebrochenen Elemente 11.3 an der gefrorenen Probe 1. Vorteilhafterweise können die anhaftenden Elemente 11.3 zur Markierung der Probe 1 verwendet werden. Beispielsweise können die Elemente 11.3 Fluoreszenzmarker oder andere Marker umfassen, durch welche die Probe 1 in einer Messeinrichtung detektierbar ist.

Gemäß Figur 6C umfasst der hydrophile Bereich kugelförmige Elemente 11.4 (zum Beispiel Nano- oder Mikrobeads). Die kugelförmigen Elemente 11.4 können verschiedene Marker tragen. Die quantitativen Verhältnisse der verschiedenen Marker innerhalb eines hydrophilen Bereichs 11 können entsprechend vorbestimmter Mischungsverhältnissen gewählt sein. Die Mischungsverhältnisse können in Abhängigkeit von der Position des hydrophilen Bereichs 11 auf der Oberfläche des Substrats 10 gewählt sein. Im Ergebnis können die gefrorenen Proben 1 auch nach der Ablösung von dem Substrat 10 durch die Analyse der an der Probe 1 anhaftenden Elemente 11.4 einer bestimmten Position auf dem Substrat zugeordnet werden.

Die Figuren 6E und 6F illustrieren, dass die hydrophilen Bereiche 11 des Substrates 10 gemäß einer weiteren Ausführungsform der Erfindung durch Löcher 11.5 gebildet werden, die an sich durch die Ausübung von Kapillarkräften hydrophil wirken oder deren Rand chemisch oder durch eine geometrische Struktur hydrophil ausgestattet ist. Entsprechend werden die Proben 1 an den Positionen der Löcher 11.5 gesammelt. Nach der Ablösung der Probe 1 gemäß Figur 6E weist die Probe 1 eine charakteristische Deformation auf, die wiederum zur Identifizierung verwendet werden kann. Figur 6F illustriert eine Variante, bei welcher der hydrophile Bereich 11 von einer Sollbruchstelle 11.6., zum Beispiel einer Perforation umgeben ist, so dass bei der Abtrennung der Probe 1 ein Teil des Substrates mit dem hydrophilen Bereich 11 ebenfalls abgetrennt wird. Wenn das Substrat 10 an der Position des hydrophilen Bereiches 11 eine Markierung, wie zum Beispiel einen Strichcode oder eine Fluoreszenzmarkierung 11 aufweist, kann dies wiederum zur Identifizierung der Probe 1 auch im abgelösten Zustand verwendet werden.

Gemäß einer abgewandelten Ausführungsform der Kryokonservierungsvorrichtung kann das Trennwerkzeug 81 durch ein Klopfwerkzeug gebildet werden, mit dem auf die Oberfläche mit den gefrorenen Proben geklopft wird, um durch die dabei auftretende Erschütterung die Proben vom Substrat abzulösen.

Abweichend von der in Figur 5 gezeigten Probenablage durch Eintauchen des Substrates kann die Probensuspension 2 gemäß einer weiteren Ausführungsform der Erfindung mit einem Flüssigkeitsförderwerkzeug 50 auf die Substratoberfläche aufgebracht werden, das gemäß den Figuren 7 und 8 einen Schlitzgießer 51 aufweist. Der Schlitzgießer 51 umfasst ein Vorratsgefäß, welches das Probenreservoir 30 zur Aufnahme der Probensuspension 2 bildet und an einer Unterseite einen Schlitz 52. Der Schlitz weist eine Breite von zum Beispiel weniger als 3 mm auf. Der Abstand des Schlitzgießers 51 von der Oberfläche des Substrates 10 ist regelbar und wird im Bereich von einigen µm bis einige mm eingestellt. Die durch den Schlitz 52 austretende Probensuspension 2 bildet ein Flüssigkeitsband 5, das durch einen Meniskus begrenzt ist und durch die Wirkung der hydrophoben Bereiche 12 des Substrates 10 nicht auseinander fließen kann. Bei der Bewegung des Substrates 10 und des Schlitzgießers 51 relativ zueinander werden an den hydrophilen Bereichen 11 entsprechend deren Form und Verteilung Tropfen (Figur 7) oder Fäden (Figur 8) gebildet.

Gemäß verschiedenen Ausführungsformen kann der Schlitzgießer 51 relativ zum Substrat 10 oder das Substrat 10 relativ zum Schlitzgießer 51 bewegt werden. Die Bildung der faden- oder linienförmigen Benetzungsstreifen gemäß Figur 8 weist den Vorteil auf, dass sich auf dem Substrat 10 größere Volumina ablegen lassen. Allerdings ist bei dieser Gestaltung eine Abtrennung der gefundenen Proben von dem Substrat erschwert. In diesem Fall ist eine Lagerung im gepackten Zustand (siehe Figur 13) bevorzugt. Allerdings ist alternativ auch eine Teilentnahme von Proben durch ein Abbrechen gefrorener Probenfäden oder Probenbänder möglich.

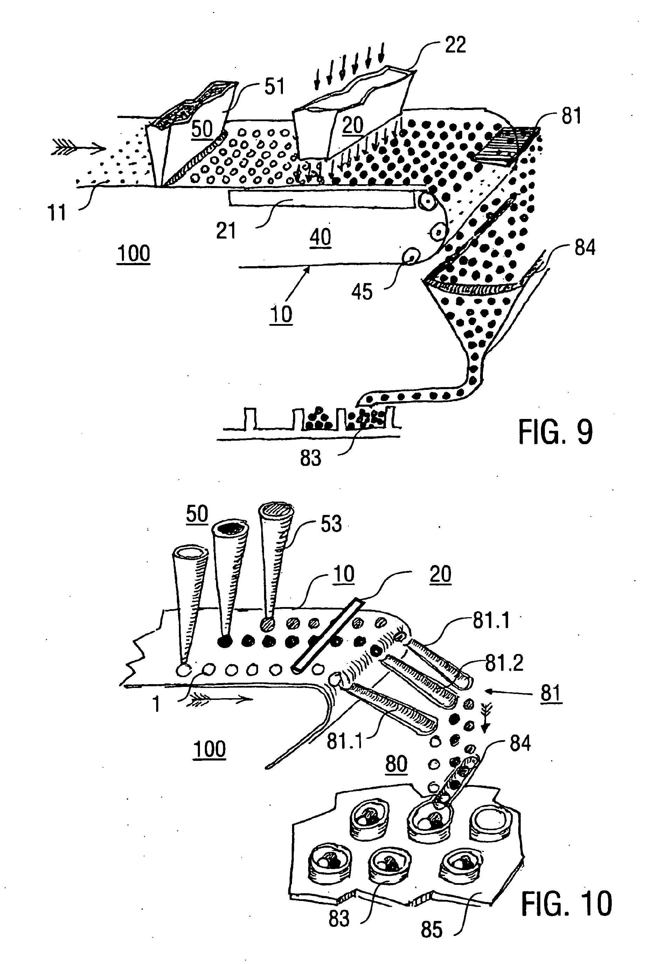

Figur 9 zeigt Teile einer weiteren Ausführungsform der erfindungsgemäßen Kryokonservierungsvorrichtung 100, bei der die Ablage der Proben mit dem Schlitzgießer 51 gemäß den Figuren 7 und 8 erfolgt. Bei dieser Ausführungsform wird das Substrat 10 durch ein Endlosband gebildet, das auf der Antriebseinrichtung 40 mit einer Vielzahl von Antriebs- und/oder Umlenkwalzen 45 umläuft. Nach dem Durchlauf des Substrates 10 mit den hydrophilen Bereichen 11 unter dem Schlitzgießer 51 befinden sich auf der Substratoberfläche die zunächst noch flüssigen Probentropfen 1. Anschließend durchlaufen die Probentropfen die Kühleinrichtung 20 mit einem Kühlblock 21, dessen Funktion durch ein Kühlgasgebläse 22 unterstützt wird. Die gefrorenen Proben 1 werden mit dem Trennwerkzeug 81 (teilweise dargestellt) vom Substrat 10 abgelöst und über einen trichterförmigen Sammler 84 in die Auffanggefäße 83 überführt.

In den Auffanggefäßen 83 erfolgt eine Ablagerung bei einer Temperatur unter - 80 °C, vorzugsweise unter - 130 °C. Die Dauer der Lagerung kann sich über Tage, Monate, Jahre oder sogar Jahrzehnte erstrecken. Die Kugelform der Proben 1 bleibt dabei erhalten, so dass sie bei langer Lagerzeit als Indikator benutzt werden kann, dass nach der Ablage und innerhalb der Lagerzeit kein Auftauen oder Befeuchten der Proben erfolgt ist.

Das Trennwerkzeug 81 kann z. B. ein mechanisches Trennwerkzeug mit einer Trennkante und/oder ein schwingungs- oder ultraschallbasiertes Trennwerkzeug umfassen.

Figur 10 zeigt einen Teil einer weiteren Ausführungsform der erfindungsgemäßen Kryokonservierungsvorrichtung 100, bei der das Flüssigkeitsförderwerkzeug 50 eine Pipettenanordnung 53 umfasst. Mit der Pipettenanordnung 53 werden tropfenförmige Proben 1 auf der modifizierten Oberfläche des Substrates 10 abgelegt. Nach Vorbeitritt an der Kühleinrichtung 20 (schematisch dargestellt) werden die gefrorenen Proben 1 mit dem Trennwerkzeug 81 von der Substratoberfläche abgelöst. Das Trennwerkzeug 81 umfasst entsprechend der Anzahl der Pipetten der Pipettenanordnung 53 mehrere Werkzeugteile 81.1 bis 81.3, von denen jedes zur Ablösung von Proben entsprechend einer durch die Pipettenanordnung gebildeten Reihe vorgesehen ist. Die Werkzeugteile 81.1 bis 81.3 weisen jeweils eine geneigt angeordnete Bahn, von deren Ende die Proben in einen Sammler 84 fallen. Der Sammler 84 ist ebenfalls geneigt angeordnet, um die gefrorenen Proben in einem der Auffanggefäße 83 abzulegen. Die Auffanggefäße 83 sind auf einem gemeinsamen Träger 85 angeordnet, der relativ zum Sammler 84 beweglich ist.

Bei dem in Figur 10 illustrierten Beispiel werden mit den Pipetten der Pipettenanordnung 53 verschiedene Arten von Proben 1 abgelegt (zum Beispiel Suspension mit Zellen eines ersten Typs (weiße Kreise), Suspension mit Zellen eines zweiten Typs (schwarze Kreise) und reines Nährmedium (schraffierte Kreise)). Die Kombination der verschiedenen Probenarten im Sammler 84 ermöglicht eine gruppenweise Ablage in den Auffanggefäßen 83. Mit dieser Verfahrensweise können bestimmte Probenzusammensetzungen, die sich nach dem Auftauen der Kryoproben vermischen sollen, nach einem vorbestimmten Programm abgelegt werden.

Die Ablösung der Proben mit dem Trennwerkzeug 81, die Überführung in den Sammler 84 und die gruppenweise Ablage in den Auffanggefäßen 83 erfolgt vorteilhafterweise mechanisch schonend und ohne besonderen Zeitdruck. Alle Teile der Trenneinrichtung 80 sind gekühlt (zum Beispiel - 130 °C). Die Überführung der Proben erfolgt in einer trockenen Atmosphäre.

Die Figuren 11 und 12 illustrieren eine abgewandelte Variante der Zugabe des Kryoprotektivums. Während bei den oben beschriebenen Ausführungsformen der Erfindung das Kryoprotektivum in der Probensuspension im Probenreservoir enthalten war, wird bei der in den Figuren 11 und 12 gezeigten Variante das Kryoprotektivum nach der Ablage der Proben auf dem Substrat 10 mit einer Applikatoreinrichtung 60 zugesetzt. Gemäß Figur 11 erfolgt die Probenablage mit dem Schlitzgießer 51, wie es oben beschrieben wurde. Die Applikatoreinrichtung 60 umfasst einen Tropfengeber 61, der zum Beispiel piezoelektrisch gesteuert ist. Mit dem Tropfengeber 61 werden die Proben 1 vor Erreichen der Kühleinrichtung 20 mit dem Kryoprotektivum versetzt. Anschließend folgt der Einfriervorgang mit der weiteren Überführung der Proben in den Lagerzustand.

Alternativ zu dem Tropfengeber 61 kann eine Sprühvorrichtung (nicht dargestellt) verwendet werden, um das Kryoprotektivum auf die Probentropfen zu sprühen. Wegen der hydrophoben Bereiche 12 zwischen den Proben 1 sammelt sich das aufgesprühte Kryoprotektivum an den Proben 1, wobei es in das Innere der Tropfen diffundieren kann.

Wenn die Tropfen mit einer Pipettenanordnung auf dem Substrat abgelegt werden, kann für die Zugabe des Kryoprotektivums ebenfalls ein Tropfengeber oder eine Sprüheinrichtung verwendet werden. Bevorzugt ist jedoch eine Variante, bei der das Kryoprotektivum tropfenweise ebenfalls mit der Pipettenanordnung 53 abgelegt wird, wie es in Figur 12 schematisch illustriert ist. Beim dargestellten Beispiel werden vier Tropfenreihen gebildet, von denen jeweils zwei benachbarte Tropfenreihen einerseits Kryoprotektivum (z. B. außen) und andererseits die Tropfen der Probensuspension enthalten. Die Applikatoreinrichtung zur Zugabe des Kryoprotektivums weist in diesem Fall eine mechanische Schiebeeinrichtung 62 mit zwei Schieberelementen 63, 64 auf, mit denen die Tropfen auf der Oberfläche des Substrats 10 zusammengeschoben werden. Die Schiebeelemente 63, 64 können wie dargestellt mechanische Elemente oder alternativ Gasdüsen zum pulsförmigen Aufblasen eines Luftstroms zur Verschiebung der Tropfen umfassen. Die freien Enden der Schiebeelemente 63, 64, die beim Zusammenschieben der Tropfen mit den jeweiligen Tropfen in Berührung kommen, sind hydrophob oder superhydrophob ausgestattet und geometrisch an die Tropfenform angepasst. Im Ergebnis der Verschiebung fusionieren jeweils ein Tropfen der Probensuspension und ein Tropfen des Kryoprotektivums. Anschließend folgt das Einfrieren mit der Kühleinrichtung (nicht dargestellt).

Das in Figur 12 illustrierte Prinzip des Zusammenschiebens von flüssigen Tropfen kann auch zur Kombination von Proben verschiedener Art, zum Beispiel mit verschiedenen Zelltypen und/oder mit verschiedenen Suspensionslösungen verwendet werden. Von Vorteil ist dabei der minimale hydrodynamische Stress bei der Fusion der Tropfen. Damit wird eine hohe Überlebensrate der suspendierten Zellen erreicht.

Beim erfindungsgemäßen Verfahren ist es nicht zwingend erforderlich, dass die gefrorenen Proben vom Substrat abgetrennt werden. Gemäß einer abgewandelten Ausführungsform des Kryokonservierungsverfahrens umfasst die Überführung des mit den gefrorenen Proben beschickten Substrates in einen Lagerzustand eine Packung des Substrates. Die gefrorenen Proben werden beispielsweise durch eine Packungseinrichtung, insbesondere durch eine Falteinrichtung oder eine Wickeleinrichtung, in eine mehrlagige Packung überführt. Zwei Varianten der erfindungsgemäßen Packung des Substrates 10 sind in den Figuren 13A und 13B illustriert.

Gemäß Figur 13A erfolgt ein Aufwickeln des Substrates 10 mit den gefrorenen Proben 1 auf einen Trägerkörper 15. Im aufgewickelten Zustand kann dann die Rolle mit den gefrorenen Proben in einer Kryobank dauerhaft abgelegt werden. Zum Aufwickeln wird als eine Packungseinrichtung eine Wickeleinrichtung (nicht dargestellt) verwendet, mit welcher der Trägerkörper 15 verbunden und drehbar ist. Die Drehgeschwindigkeit des Trägerkörpers 15 kann in Abhängigkeit von der Temperatur eingestellt werden.

Gemäß Figur 13B ist eine schichtweise Packung des umgeschlagenen Substrats 10 illustriert. An wenigstens einem Rand des umgeschlagenen Substrates 10 sind stabförmige Stabilisierungskörper 16 vorgesehen, die der Handhabung und mechanischen Stabilisierung der Packung des Substrates 10 dienen.

Zwischen den zueinander weisenden, mit Proben beschickten Oberflächen des Substrates 10 können bei der Packung gemäß Figur 13B Trennfolien 17 eingelegt sein, um eine gegenseitige Beeinflussung der Proben auch im konservierten Zustand zu vermeiden.

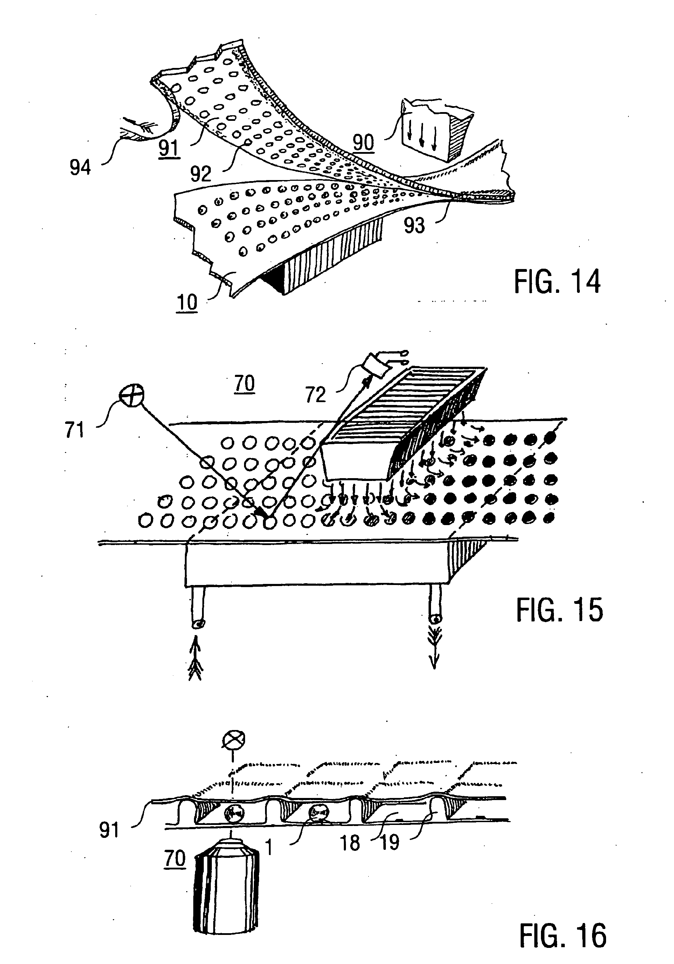

Anstelle der Trennfolien kann gemäß Figur 14 eine Abdeckfolie 91 bereits unmittelbar nach dem Einfrieren der Proben mit der Kühleinrichtung 20 auf das Substrat 10 aufgebracht werden. Die Abdeckfolie 91 ist zum Beispiel eine tieftemperaturbeständige Kunststoff- oder Metallfolie. Sie besteht z. B. aus Polyethylen oder TPX. Wenn die Abdeckfolie transparent ist, können die Proben vorteilhafterweise auch im konservierten Zustand gut überwacht werden. Sie enthält optional (wie dargestellt) Vertiefungen 92 entsprechend der Anordnung der Proben 1 auf dem Substrat 10. Des Weiteren ist ein Randbereich 93 zur Verbindung mit dem Substrat 10 vorgesehen. Der Randbereich 93 dient der Verbindung zum Beispiel durch Kleben oder Schweißen. Zur Verbindung der Abdeckfolie 91 mit dem Substrat 10 wird eine Abdeckeinrichtung 90 verwendet, mit der gegebenenfalls ein Schutzstreifen 94 vom Randbereich 93 abgezogen und durch ein Stempeln die Verbindung zwischen der Abdeckfolie 93 und dem Substrat 10 hergestellt wird. Anschließend erfolgt die Überführung des Substrats in den Lagerzustand, zum Beispiel die Packung gemäß den Figuren 13A oder 13B. Die Abdeckfolie kann auch selbstklebend sein.

Figur 15 illustriert einen Ausschnitt der in Figur 9 gezeigten Ausführungsform der erfindungsgemäßen Kryokonservierungsvorrichtung mit einer Messeinrichtung 70 zur optischen Erfassung von Eigenschaften der Proben 1. Es ist zum Beispiel eine optische Messeinrichtung mit einer Lichtquelle 71 und einem Detektor 72 vorgesehen, mit denen eine Beobachtung des Fortschritts des Einfriervorganges durchgeführt wird. Alternativ oder zusätzlich kann eine Impedanz- und/oder Leitfähigkeitsmessung vorgesehen sein, die über in das Substrat 10 integrierte Mikroelektroden durchgeführt wird.

Die Umsetzung der Erfindung ist nicht auf Substrate mit ebenen Oberflächen beschränkt, in denen die hydrophilen und hydrophoben Bereiche durch chemische oder mechanische Modifizierungen gebildet sind. Alternativ können auch Substrate mit einer Kompartimentstruktur verwendet werden, wie es schematisch in Figur 16 illustriert ist. Die Kompartimentstruktur wird gebildet, indem das Substrat 10 aus einer Grundfläche 18 mit vorspringenden Wandelementen 19 gebildet wird. Die Wandelemente 19 bilden die Kompartimente, auf deren Boden jeweils ein hydrophiler Bereich vorgesehen ist. Die Beschickung eines derart strukturierten Substrates erfolgt entsprechend den oben beschriebenen Prinzipien. In jedem Kompartiment wird eine tropfenförmige Probe 1 abgelegt. Das strukturierte Substrat kann des Weiteren mit einer Abdeckfolie 91 verschlossen werden, wie es in Figur 14 gezeigt ist.

Vorzugsweise werden die Materialien des Substrates 10 und der Abdeckfolie 91 mit einer hohen optischen Qualität gewählt. Sie bestehen zum Beispiel aus TPX oder Polyethylen. In diesem Fall kann eine optische Messung und insbesondere eine Beobachtung der Proben 1 im gefrorenen Zustand mit einem Mikroskop 70 vorgesehen sein, wie es in Figur 16 schematisch illustriert ist.

Die in der vorstehenden Beschreibung, den Zeichnungen und den Ansprüchen offenbarten Merkmale können sowohl einzeln als auch in Kombination für die Verwirklichung der Erfindung in ihren verschiedenen Ausgestaltungen von Bedeutung sein.

## Patentansprüche

1. Verfahren zur Kryokonservierung biologischer Proben (1), mit den Schritten:
- Ablage der Proben (1) in einem flüssigen Zustand auf der Oberfläche eines Substrates (10), und
- Abkühlung der Proben (1) in einen gefrorenen Zustand mit einer Kühleinrichtung (20), wobei
- die Oberfläche des Substrates (10) flüssigkeitsanziehende Bereiche (11) aufweist, die durch flüssigkeitsabstoßende Bereiche (12) voneinander getrennt sind, und
- die Ablage eine Verteilung der Proben (1) auf der Oberfläche des Substrates (10) umfasst, wobei sich die Proben (1) auf den flüssigkeitsanziehenden Bereichen (11) sammeln, **gekennzeichnet durch** den weiteren Schritt:
- Bewegung des Substrats (10) und eines Probenreservoirs (30) relativ zueinander, wobei die Proben (1) vom Probenreservoir (30) auf die Oberfläche des Substrats (10) übertragen werden, und wobei wenigstens die Oberfläche des Substrats (10) in das Probenreservoir (30) eingetaucht wird oder die Proben (1) mit einem Flüssigkeitsförderwerkzeug (50) vom Probenreservoir (30) auf die Oberfläche des Substrats (10) aufgetragen werden.

2. Verfahren nach Anspruch 1 , mit dem Schritt:
- Zugabe eines Kryoprotektivums (2) auf das Substrat (10).

3. Verfahren nach Anspruch 2, bei dem die Zugabe des Kryoprotektivums (2) eine Diffusion des Kryoprotektivums von der Oberfläche des Substrates in die Proben (1) oder ein Sprühen des Kryoprotektivums (2) auf die Proben (1) umfasst.

4. Verfahren nach mindestens einem der vorhergehenden Ansprüche, mit dem Schritt:
- Messung zur Erfassung mindestens einer Eigenschaft der Proben (1).

5. Verfahren nach mindestens einem der vorhergehenden Ansprüche, mit dem Schritt:
- Überführung der gefrorenen Proben in einen Lagerzustand.

6. Verfahren nach Anspruch 5, bei dem die Überführung der gefrorenen Proben in den Lagerzustand eine Trennung der gefrorenen Proben (1) vom Substrat (10) oder eine mehrlagige Packung des Substrats (10) umfasst.

7. Verfahren nach Anspruch 6, bei dem die Packung ein Schichten oder ein Wickeln des Substrats (10) umfasst.

8. Verfahren nach mindestens einem der vorhergehenden Ansprüche, bei dem die Proben (1) entsprechend einem vorbestimmten Muster der flüssigkeitsanziehenden Bereichen punktförmig oder linienförmig auf der Oberfläche des Substrats (10) abgelegt werden.

9. Vorrichtung zur Kryokonservierung biologischer Proben (1), die umfasst:
- ein Substrat (10) zur Ablage der Proben (1) in einem flüssigen Zustand, und
- eine Kühleinrichtung (20) zur Überführung der Proben (1) auf dem Substrat (10) in einen gefrorenen Zustand,
**dadurch gekennzeichnet, dass**
- das Substrat (10) eine Folie ist und eine Oberfläche mit flüssigkeitsanziehenden Bereichen (11) aufweist, die durch flüssigkeitsabstoßende Bereiche (12) voneinander getrennt sind

10. Vorrichtung nach Anspruch 9, die ein Probenreservoir aufweist (30), von dem die Proben (1) auf das Substrat (10) überführbar sind, und eine Antriebseinrichtung (40) zur Bewegung des Substrats (10) relativ zu dem Probenreservoir (30) aufweist, wobei das Probenreservoir (30) ein Tauchgefäß (31) oder ein Gießgefäß (32) umfasst.

11. Vorrichtung nach Anspruch 10, die ein Flüssigkeitsförderwerkzeug (50) zur Übertragung der Probe (1) von dem Gießgefäß (32) auf die Oberfläche des Substrats (10) aufweist.

12. Vorrichtung nach Anspruch 11, bei der das Flüssigkeitsförderwerkzeug (50) einen Schlitzgießer (51) oder einen Tropfendispenser (51) umfasst.

13. Vorrichtung nach mindestens einem der Ansprüche 9 bis 12, die eine Applikatoreinrichtung (60) zur Zuführung eines Kryoprotektivums (2) aufweist.

14. Vorrichtung nach Anspruch 13, bei der die Applikatoreinrichtung eine Sprüheinrichtung (61) oder eine Schiebereinrichtung (62) umfasst.

15. Vorrichtung nach mindestens einem der Ansprüche 9 bis 14, die eine Trenneinrichtung (80) zur Trennung der gefrorenen Proben (1) vom Substrat und zur Überführung der Proben (1) in einen Lagerzustand aufweist.

16. Vorrichtung nach mindestens einem der Ansprüche 9 bis 15, die eine Packungseinrichtung zur Überführung der gefrorenen Proben (1) in eine mehrlagige Packung des Substrats (10) aufweist.

17. Vorrichtung nach Anspruch 16, bei der die Packungseinrichtung (90) eine Falteinrichtung (91), eine Wickeleinrichtung (92) und/oder eine Abdeckeinrichtung (93) umfasst.

18. Verwendung eines Substrates (10), das eine Folie ist, und dessen Oberfläche flüssigkeitsanziehende Bereichen (11) aufweist, die durch flüssigkeitsabstoßende Bereiche (12) voneinander getrennt sind, zur Kryokonservierung biologischer Proben, insbesondere von Blutproben.

## Claims

1. A method for cryopreservation of biological samples (1), with the steps of:
- depositing the samples (1) in a liquid state on the surface of a substrate (10), and
- cooling the samples (1) into a frozen state with a cooling device (20), wherein
- the surface of the substrate (10) has liquid-attracting regions (11) which are separated from one another by liquid-repellent regions (12), and
- the depositing comprises a distribution of the samples (1) on the surface of the substrate (10), wherein the samples (1) collect on the liquid-attracting regions (11), **characterized by** the further step of:
- moving the substrate (10) and a sample reservoir (30) relatively to one another, wherein the samples (1) are transferred from the sample reservoir (30) onto the surface of the substrate (10), and wherein at least the surface of the substrate (10) is dipped into the sample reservoir (30) or the samples (1) are applied with a liquid conveying tool (50) from the sample reservoir (30) onto the surface of the substrate (10).

2. The method according to Claim 1, with the step of:
- adding a cryoprotectant (2) to the substrate (10).

3. The method according to Claim 2, in which the adding of the cryoprotectant (2) comprises a diffusion of the cryoprotectant from the surface of the substrate into the samples (1) or a spraying of the cryoprotectant (2) onto the samples (1).

4. The method according to at least one of the preceding claims, with the step of:
- measuring for detecting at least one property of the samples (1).

5. The method according to at least one of the preceding claims, with the step of:
- transferring the frozen samples into a storage state.

6. The method according to Claim 5, in which the transferring of the frozen samples into the storage state comprises a separation of the frozen samples (1) from the substrate (10) or a multi-layered packing of the substrate (10).

7. The method according to Claim 6, in which the packing comprises a coating or a winding of the substrate (10).

8. The method according to at least one of the preceding claims, in which the samples (1) are deposited corresponding of a predetermined pattern of the liquid-attracting regions in a punctiform or linear manner on the surface of the substrate (10).

9. An apparatus for cryopreservation of biological samples (1), comprising:
- a substrate (10) for depositing the samples (1) in a liquid state, and
- a cooling device (20) for transferring the samples (1) on the substrate (10) into a frozen state, **characterized in that**
- the substrate (10) is a film and has a surface with liquid-attracting regions (11) which are separated from one another by liquid-repellent regions (12).

10. The apparatus according to Claim 9, which has a sample reservoir (30), from which the samples (1) can be conveyed onto the substrate (10), and a drive device (40) for moving the substrate (10) relatively to the sample reservoir (30), wherein the sample reservoir (30) comprises a dip tank (31) or a pouring tank (32).

11. The apparatus according to Claim 10, which has a liquid conveying tool (50) for transferring the sample (1) from the pouring tank (32) onto the surface of the substrate (10).

12. The apparatus according to Claim 11, in which the liquid conveying tool (50) comprises a slot pourer (51) or a drop dispenser (51).

13. The apparatus according to at least one of Claims 9 to 12, which has an applicator device (60) for supplying a cryoprotectant (2).

14. The apparatus according to Claim 13, in which the applicator device has a spray device (61) or a slider device (62).

15. The apparatus according to at least one of Claims 9 to 14, which has a separation device (80) for separating the frozen samples (1) from the substrate and for transferring the samples (1) into a storage state.

16. The apparatus according to at least one of Claims 9 to 15, which has a packing device for transferring the frozen samples (1) into a multi-layered packing of the substrate (10).

17. The apparatus according to Claim 16, in which the packing device (90) comprises a folding device (91), a winding device (92) and/or a covering device (93).

18. A use of a substrate (10), which is a film, and the surface of which has liquid-attracting regions (11) which are separated from one another by liquid-repellent regions (12), for the cryopreservation of biological samples, particularly of blood samples.

## Revendications

1. Procédé de cryoconservation d'échantillons biologiques (1), comportant les étapes suivantes :
- dépôt des échantillons (1) dans un état liquide à la surface d'un substrat (10), et
- refroidissement des échantillons (1) pour obtenir un état de congélation au moyen d'un dispositif de réfrigération (20),
- la surface du substrat (10) présentant des zones attirant les liquides (11), séparées entre elles par des zones repoussant les liquides (12), et
- le dépôt incluant une répartition des échantillons (1) à la surface du substrat (10), les échantillons (1) s'accumulant sur les zones attirant les liquides (11), **caractérisé en ce qu'**il comporte en outre l'étape de :
- déplacement du substrat (10) et d'un réservoir à échantillons (30) l'un par rapport à l'autre, où les échantillons (1) sont transférés du réservoir à échantillons (30) à la surface du substrat (10), et où au moins la surface du substrat (10) est plongée dans le réservoir à échantillons (30), ou les échantillons (1) appliqués du réservoir à échantillons (30) sur la surface du substrat (10) par un outil de transport de liquide (50).

2. Procédé selon la revendication 1, comportant l'étape suivants :
- ajout d'un cryoprotecteur (2) sur le substrat (10).

3. Procédé selon la revendication 2, où l'ajout du cryoprotecteur (2) inclut une diffusion du cryoprotecteur de la surface du substrat vers les échantillons (1) ou une pulvérisation du cryoprotecteur (2) sur les échantillons (1).

4. Procédé selon au moins une des revendications précédentes, comportant l'étape suivants :
- mesure de détermination d'au moins une propriété des échantillons (1).

5. Procédé selon au moins une des revendications précédentes, comportant l'étape suivants :
- transfert des échantillons congelés vers un état de stockage.

6. Procédé selon la revendication 5, où le transfert des échantillons congelés vers l'état de stockage comprend une séparation des échantillons (1) congelés du substrat (10) ou un conditionnement en plusieurs couches du substrat (10).

7. Procédé selon la revendication 6, où le conditionnement comprend un pliage en couches ou un enroulement du substrat (10).

8. Procédé selon au moins une des revendications précédentes, où les échantillons (1) sont déposés ponctuellement ou linéairement à la surface du substrat (10), conformément à un motif défini pour les zones attirant les liquides.

9. Dispositif pour la cryoconservation d'échantillons biologiques (1), comprenant :
- un substrat (10) pour le dépôt des échantillons (1) dans un état liquide, et
- un dispositif de réfrigération (20) pour le transfert vers un état de congélation des échantillons (1) sur le substrat (10),
**caractérisé en ce que**
- le substrat (10) est un film et comporte une surface avec des zones attirant les liquides (11), séparées entre elles par des zones repoussant les liquides (12).

10. Dispositif selon la revendication 9, comportant un réservoir à échantillons (30) duquel les échantillons (1) sont transférables vers le substrat (10), et un dispositif d'entraînement (40) pour le déplacement du substrat (10) par rapport au réservoir à échantillons (30), le réservoir à échantillons (30) comprenant un récipient de plongée (31) ou un récipient de coulée (32).

11. Dispositif selon la revendication 10, comportant un outil de transport de liquide (50) pour le transfert de l'échantillon (1) du récipient de coulée (32) vers la surface du substrat (10).

12. Dispositif selon la revendication 11, où l'outil de transport de liquide (50) comprend un asperseur à fente (51) ou un distributeur goutte-à-goutte (51).

13. Dispositif selon au moins une des revendications 9 à 12, comportant un dispositif applicateur (60) pour la diffusion d'un cryoprotecteur (2).

14. Dispositif selon la revendication 13, où le dispositif applicateur comprend un dispositif de pulvérisation (61) ou un dispositif à vanne (62).

15. Dispositif selon au moins une des revendications 9 à 14, comprenant un dispositif séparateur (80) pour la séparation des échantillons (1) congelés du substrat et pour le transfert des échantillons (1) vers un état de stockage.

16. Dispositif selon au moins une des revendications 9 à 15, comportant un dispositif de conditionnement pour le transfert des échantillons (1) congelés vers un conditionnement en plusieurs couches du substrat (10).

17. Dispositif selon la revendication 16, où le dispositif de conditionnement (90) comprend un dispositif de pliage (91), un dispositif d'enroulement (92) et/ou un dispositif de couverture (93).

18. Utilisation d'un substrat (10) qui est un film et dont la surface comporte des zones attirant les liquides (11) séparées entre elles par des zones repoussant les liquides (12), pour la cryoconservation d'échantillons biologiques, notamment d'échantillons sanguins.
